# EUROPÄISCHE PATENTSCHRIFT

(11) **EP 3 781 899 B1**
(45) Veröffentlichungstag und Bekanntmachung des Hinweises auf die Patenterteilung: **04.01.2023**
(21) Anmeldenummer: 19722799.4
(22) Anmeldetag: 16.04.2019
(51) Int. Cl.: G01B 11/24, G01B 11/25, G01B 11/26, G01M 11/02

(54) **OPTISCHE MESSEINRICHTUNG SOWIE VERFAHREN ZUM VERMESSEN EINES OPTISCHEN ELEMENTS**
OPTICAL MEASURING DEVICE AND METHOD FOR MEASURING AN OPTICAL ELEMENT
DISPOSITIF OPTIQUE DE MESURE ET PROCÉDÉ DE MESURE D'UN ÉLÉMENT OPTIQUE

(30) Priorität: 18.04.2018 DE 202018102149 U
(43) Veröffentlichungstag der Anmeldung: 24.02.2021
(73) Patentinhaber: Möller-Wedel Optical GmbH, 22880 Wedel (DE)
(72) Erfinder: DAHL, Michael, 21449 Radbruch (DE)
(74) Vertreter: Glawe, Delfs, Moll
(86) Internationale Anmeldenummer: PCT/EP2019/059839
(87) Internationale Veröffentlichungsnummer: WO 2019/201947

(56) Entgegenhaltungen:
- DE-A1- 3 629 648
- DE-A1-102013 001 458
- JP-A- H0 470 540
- JP-A- S5 515 120

## Beschreibung

Gegenstand der vorliegenden Erfindung ist eine Einrichtung sowie ein Verfahren zur Vermessung eines optischen Elements. Die Einrichtung umfasst eine Lichtquelle, eine Abbildungsoptik, eine Messstruktur sowie einen Sensor. Die Messstruktur wird vom Licht der Lichtquelle beleuchtet und weist Bereiche unterschiedlichen Transmissionsgrades auf. Die Abbildungsoptik ist zur Umwandlung von durch die Messstruktur transmittiertem Licht in einen kollimierten Messstrahl ausgebildet, welcher auf das optische Element gerichtet ist. Der Sensor ist zur Erfassung einer am optischen Element erzeugten Reflexion des Messstrahls oder zur Erfassung einer durch das optische Element hindurchtretenden Transmission des Messstrahls ausgebildet.

Aus dem Stand der Technik ist es bekannt, einen solchen Messstrahl beispielsweise auf eine Planfläche eines optischen Elements zu richten und die Reflexion des Messstrahls an der Planfläche anschließend mit einem Sensor zu erfassen. Ein Bild der Messstruktur wird ebenfalls an der Planfläche reflektiert und kann auf dem Sensor auf einfache Weise erfasst werden. Anhand einer Bestimmung der Position der Messstruktur auf dem Sensor kann beispielsweise die Ausrichtung der Planfläche bestimmt werden (siehe zum Beispiel WO 2012 037 909 oder DE 10 2013 001 458 A1). Für die Messung kann eine Kombination aus einem Kollimator und einem Teleskop verwendet werden, wobei der vom Kollimator erzeugte Messstrahl am optischen Element reflektiert und anschließend vom Teleskop auf den Sensor abgebildet wird. Alternativ kann auch ein Autokollimator verwendet werden, bei dem der reflektierte Messstrahl wieder in den Autokollimator eintritt und über einen Strahlteiler zum Sensor gelangt. Aus dem Dokument JP H04 70540 A ist eine automatische Linsenmesseinrichtung bekannt, mit der die Position einer Linse sowie deren Brechkraft ermittelt werden kann. Nachteilig an solchen Messeinrichtungen ist jedoch, dass das untersuchte optische Element eine ausreichend große Planfläche aufweisen muss, an der der Messstrahl homogen in eine definierte Richtung reflektiert wird. Lokale Abweichungen der Richtung des reflektierten Messstrahls, welche beispielsweise durch lokale Defokussierung, lokale Formabweichungen der untersuchten optischen Fläche oder andere Einflussfaktoren entstehen, können mit den bekannten Messeinrichtungen nicht oder zumindest nicht mit hinreichender Genauigkeit vermessen werden. Auch optische Flächen, welche eine von einer Planfläche abweichende Form aufweisen, beispielsweise gekrümmte oder sphärische Flächen, können mit der bekannten Messeinrichtung häufig nicht zufriedenstellend oder nur unter erhöhtem messtechnischen Aufwand vermessen werden.

Ausgehend hiervon ist es die Aufgabe der vorliegenden Erfindung eine Einrichtung zur Vermessung eines optischen Elements bereitzustellen, welche flexibler einsetzbar ist. Gelöst wie diese Aufgabe mit den Merkmalen der unabhängigen Ansprüche. Vorteilhafte Ausführungsformen sind in den Unteransprüchen beschrieben.

Erfindungsgemäß weist die Lichtquelle eine Mehrzahl von Lichtsegmenten auf, wobei die Einrichtung weiterhin eine Steuereinheit aufweist, welche zur unabhängigen Ansteuerung der Mehrzahl von Lichtsegmenten ausgebildet ist.

Zunächst werden einige im Rahmen der Erfindung verwendete Begriffe erläutert. Ein Lichtsegment der Lichtquelle bezeichnet einen eigenständig Licht abstrahlenden Teil der Lichtquelle. Jedes Segment der Lichtquelle ist also dazu ausgebildet, eigenständig Licht zu emittieren. Durch die unabhängige Ansteuerbarkeit der Segmente kann die Lichtquelle so geschaltet werden, dass nur ein einzelnes Lichtsegment oder eine beliebig auswählbare Gruppe von Lichtsegmenten Licht emittiert, während die übrigen Segmente ausgeschaltet bleiben, also kein Licht abgeben. Das jeweilige Segment oder die Gruppe von Segmenten kann bevorzugt durch die Steuereinheit beliebig ausgewählt werden. Das von dem einzelnen Segment oder der Gruppe von Segmenten abgegebene Licht wird durch die Abbildungsoptik in Richtung des optischen Elements gelenkt.

Die Abbildungsoptik ist zur Erzeugung eines kollimierten Messstrahls ausgebildet. Dies bedeutet, dass der von der Abbildungsoptik erzeugte Messstrahl durch ein im Wesentlichen paralleles Lichtbündel gebildet ist.

Die Abbildungsoptik weist bevorzugt einen Kondensor und ein Objektiv auf. Die Messstruktur befindet sich in einem Strahlengang der Abbildungsoptik und ist bevorzugt zwischen dem Kondensor und dem Objektiv angeordnet. Vorzugsweise wird die Messstruktur von der Abbildungsoptik ins Unendliche abgebildet. Die Messstruktur kann beispielsweise als Strichplatte ausgebildet sein, bei der Bereiche mit hohem Transmissionsgrad durch sich kreuzende Linien gebildet sind, welche beispielsweise senkrecht zueinander stehen. Die übrigen Bereiche der Strichplatte können einen geringeren Transmissionsgrad aufweisen oder für den Messstrahl undurchlässig sein. Die lichtdurchlässigen Bereiche der Messstruktur können auch eine beliebige andere Form aufweisen, welche eine Positionsbestimmung des reflektierten Messstrahls auf dem Sensor ermöglichen oder vereinfachen. Eine einfache Lochblende wird im Rahmen der Erfindung nicht als Messstruktur angesehen.

Der Sensor weist gewöhnlich eine Erstreckung in einer Ebene senkrecht zur Einfallsrichtung des reflektierten Messstrahls auf, wobei auf der Sensorebene eine ortsaufgelöste Erfassung des Reflexes möglich ist. Beispielsweise kann der Sensor als CCD-Sensor oder als CMOS-Sensor ausgebildet sein. Die Einrichtung kann eine Auswerteeinheit aufweisen, welche zur Auswertung der vom Sensor erfassten Messsignale ausgebildet ist.

Das "optische Element" ist im Rahmen der Erfindung dazu ausgebildet den Messstrahl zumindest teilweise zu reflektieren und/oder zumindest teilweise zu transmittieren, so dass die Reflexion bzw. die Transmission des Messstrahls vom Sensor erfasst werden kann. Der Begriff "Transmission des Messstrahls" bezeichnet einen Anteil des Lichts des Messstrahls, welcher durch das optische Element hindurchtritt. Das optische Element kann beliebige Formen aufweisen, insbesondere ist es nicht erforderlich, dass das optische Element eine Planfläche aufweist.

Durch die unabhängig ansteuerbaren Lichtsegmente wird der Anwendungsbereich der Vermessungseinrichtung deutlich erweitert. Einerseits kann die erfindungsgemäße Einrichtung wie oben beschrieben die üblichen Aufgaben eines Autokollimators bzw. einer Kombination von Kollimator und Teleskop erfüllen, wobei in diesem Fall beispielsweise sämtliche oder zumindest ein Großteil der Lichtsegmente zur Abgabe von Licht angesteuert werden können, um einen auf das optische Element gerichteten Messstrahl zu erzeugen.

Zusätzlich ermöglicht es die erfindungsgemäße Einrichtung, beispielsweise lediglich ein einzelnes Lichtsegment anzusteuern, so dass über die Abbildungsoptik nur ein kleinerer Teil des Messstrahls auf das zu vermessende optische Element trifft und dort reflektiert oder transmittiert wird. Dadurch wird es möglich, lediglich einen kleinen Teil des zu vermessenden optischen Elements abzutasten. Im Rahmen der Erfindung wurde erkannt, dass dieser kleinere Teil des Messstrahls aufgrund der gleichzeitigen Verwendung der Messstruktur ausreichend ist, um aussagekräftige Informationen über das zu vermessende optische Element zu erhalten. Insbesondere kann auf diese Weise eine ortsaufgelöste Messung durchgeführt werden, durch die Informationen über die lokale Richtung der Reflexion am optischen Element oder über die durch das Bauelement transmittierte Wellenfront mit hoher Genauigkeit gewonnen werden können. Eine solche Messung kann für jedes einzelne der Lichtsegmente wiederholt werden. Zudem kann auch vorgesehen sein, dass gleichzeitig eine beliebig auswählbare Gruppe von Lichtsegmenten zur Beleuchtung verwendet wird. Durch die erfindungsgemäße Einrichtung können auf diese Weise ortsaufgelöste Informationen über die Richtung der Reflexion am zu vermessenden optischen Element mit hoher Genauigkeit bei skalierbarer Auflösung gewonnen werden. Aus den Informationen über die lokalen Richtungen der Reflexion kann dann beispielsweise mit Hilfe der Auswerteeinheit anhand bekannter mathematischer Verfahren die Oberflächenform der zu vermessenden optischen Fläche berechnet werden. Bei einer Detektion des transmittierten Messstrahls kann die durch das Bauelement erzeugte Wellenfrontdeformation des Messstrahls ermittelt und auf diese Weise beispielsweise eine ortsaufgelöste Bestimmung der Transmissionseigenschaften des optischen Elements vorgenommen werden.

Wie oben erläutert kann die Abbildungsoptik zur Erzeugung des Messstrahls einen Kondensor sowie ein Objektiv aufweisen. Vorzugsweise ist der Kondensor zur Abbildung der Lichtquelle in eine Eintrittspupille des Objektivs ausgebildet. Objektiv und Kondensor können jeweils durch eine einzelne Linse oder durch ein Linsensystem gebildet sein. Die Lichtquelle ist bevorzugt in der Objektebene des Kondensors angeordnet. Die Bildebene des Kondensors stimmt bevorzugt mit der Eintrittspupille des Objektivs überein. Es entsteht auf diese Weise ein sogenannter verflochtener Strahlengang. Das Licht der segmentierten Lichtquelle wird auf diese Weise optimal ausgenutzt, um daraus den aus einem parallelen Lichtbündel gebildeten Messstrahl zu erzeugen. Wenn lediglich ein einzelnes Lichtsegment eingeschaltet ist, wird durch die oben beschriebene Ausgestaltung zwischen der Abbildungsoptik (bzw. zwischen der letzten Linse des Objektivs) und dem zu vermessenden optischen Element ein paralleles Teilbündel erzeugt, welches lediglich auf einen kleineren Abschnitt des optischen Elements fällt und nach Reflexion vom Sensor erfasst wird. Um nun die Richtung der Reflexion bzw. der Transmission eines Teilbündels zu ermitteln wird die Position der Abbildung der Messstruktur auf dem Sensor erfasst. Dazu befinden sich vorzugsweise sowohl der Sensor als auch die Messstruktur in der Fokusebene des Objektivs.

Die Lichtsegmente sind erfindungsgemäß in Transversalrichtung (also senkrecht zur optischen Achse) zueinander versetzt angeordnet. Dadurch werden von unterschiedlichen Segmenten in Transversalrichtung zueinander versetzte Teilstrahlen des Messstrahls erzeugt. Die optische Achse der Abbildungsoptik kann durch das Zentrum der Lichtquelle verlaufen. In einer bevorzugten Ausführungsform ist zumindest ein Teil der Lichtsegmente in einer Ebene angeordnet, wobei die Ebene vorzugsweise einen Winkel mit einer optischen Achse der Abbildungsoptik einschließt, welcher bevorzugt im Wesentlichen 90° beträgt. Vorzugsweise stimmt die Ebene mit der Objektebene des Kondensors überein. Durch eine solche Anordnung werden die Segmente gleichmäßig in die Eintrittspupille des Objektivs abgebildet und können gleichmäßig zur Bildung des Messstrahls beitragen.

Die Lichtsegmente können ein regelmäßiges Gitter bilden. Der Begriff "Gitter" bedeutet in diesem Zusammenhang, dass die jeweiligen Segmente eine regelmäßige Anordnung relativ zueinander aufweisen. Die Regelmäßigkeit kann sowohl entlang einer ersten Raumrichtung als auch entlang einer zweiten Raumrichtung, die von der ersten Raumrichtung verschieden ist, bestehen. Die Lichtsegmente können gleichmäßige Abstände aufweisen. Die Abstände von zwei Segmenten entlang der ersten Raumrichtung können mit den Abständen der Segmente entlang der zweiten Raumrichtung übereinstimmen. Die beiden Raumrichtungen können senkrecht zueinander sein, so dass in diesem Fall ein rechtwinkliges Gitter gebildet wird.

In einer Vorteilhaften Ausführung ist die Lichtquelle kreisförmig, wobei die Segmente den Kreis in z.B. Viertel oder Hälften teilen. Möglich ist auch, dass die Segmente ein "kreisförmiges Gitter" bilden. Dies bedeutet, dass ein zentrales Segment von weiteren Segmenten ringförmig (also mit jeweils im Wesentlichen demselben Abstand zum zentralen Segment) umgeben ist. Um die ringförmig angeordneten Segmente herum können ein oder mehrere weitere Ringe von Lichtsegmenten angeordnet sein, wobei die Durchmesser der Ringe nach außen hin zunehmen. Das zentrale Segment kann auf der optischen Achse angeordnet sein.

Durch die regelmäßige Anordnung der Segmente kann ein zu vermessendes optisches Element systematisch optisch abgetastet werden, so dass aussagekräftige Informationen über die Oberfläche des Elements oder die vom optischen Element erzeugte Wellenfrontdeformation gewonnen werden können.

Ein Lichtsegment kann durch eine lichtemittierende Diode gebildet sein. Insbesondere können die lichtemittierenden Dioden durch organische lichtemittierende Dioden (OLED) gebildet sein. Mit Hilfe von LEDs oder OLEDs können im Wesentlichen punktförmige Lichtsegmente mit gerichteter Abstrahlcharakteristik gebildet werden, wobei gleichzeitig eine hohe Leuchtstärke realisiert werden kann. In einer bevorzugten Ausführungsform ist ein Lichtsegment durch ein Austrittsende eines Lichtwellenleiters gebildet. In einer weiteren bevorzugten Ausführungsform kann ein Lichtsegment einen Mikrospiegel eines DLP-Chips aufweisen (Digital Micromirror Device).

Die Lichtsegmente weisen vorzugsweise in Transversalrichtung (also senkrecht zur optischen Achse) eine Abmessung auf, welche kleiner ist als 2 mm, bevorzugt kleiner als 1 mm, weiter bevorzugt kleiner als 0,5 mm. Bei einer Ausgestaltung als Mikrospiegel kann die Abmessung noch deutlich kleiner sein, beispielsweise kleiner als 5 µm. Die genannte Abmessung bezieht sich jeweils auf die lichtabstrahlende Fläche eines Lichtsegments. Die lichtabstrahlende Fläche der Lichtsegmente kann grundsätzlich eine beliebige Form aufweisen, bevorzugt ist die Form jedoch kreisförmig, elliptisch, rechteckig oder quadratisch. Vorzugsweise beträgt die Anzahl der Lichtsegmente einer Lichtquelle mindestens 2, weiter vorzugsweise mindestens 4, noch weiter vorzugsweise mindestens 8. Die Anzahl der Lichtsegmente kann auch deutlich höher sein als 8. Beispielsweise kann bei der Verwendung von Mikrospiegeln eine Anzahl von mehr als 100.000 oder 1.000.000 Lichtsegmente vorgesehen sein. Je kleiner die Abmessungen der Lichtsegmente sind und je mehr Lichtsegmente die Lichtquelle aufweist, desto besser ist die erzielbare Ortsauflösung.

Es kann weiterhin vorgesehen sein, dass die Lichtsegmente zur Abgabe von Licht einer ersten Wellenlänge und zumindest einer zweiten von der ersten verschiedenen Wellenlänge ausgebildet sind. Die Steuereinheit ist bevorzugt dazu ausgebildet, die Lichtsegmente anzusteuern, um zwischen der ersten und zumindest der zweiten Wellenlänge umzuschalten. Möglich ist auch, dass ein erstes Lichtsegment zur Abgabe von Licht der ersten Wellenlänge und ein zweites Lichtsegment zur Abgabe von Licht der zweiten Wellenlänge ausgebildet sind. Die Abgabe von "Licht einer Wellenlänge" bedeutet, dass das emittierte Licht aus einem schmalen spektralen Teilbereich stammt. Da optische Elemente bezüglich verschiedener Wellenlängen unter Umständen ein unterschiedliches Reflexions- und Transmissionsverhalten aufweisen, können durch diese Ausgestaltung zusätzliche Informationen gewonnen werden.

Es kann vorgesehen sein, dass die erfindungsgemäße Einrichtung einen Kollimator und ein Teleskop aufweist, wobei die Lichtquelle und die Abbildungsoptik Teil des Kollimators sind und wobei der Sensor in der Bildebene des Teleskops angeordnet ist. In einer bevorzugten Ausführungsform ist die erfindungsgemäße Einrichtung als Autokollimator ausgebildet, wobei der Sensor in einer Bildebene der Abbildungsoptik angeordnet ist. Ein Strahlteiler ist bevorzugt im Strahlengang der Abbildungsoptik angeordnet, so dass er sich im Strahlengang zwischen dem Kondensor und dem Objektiv sowie zwischen dem Sensor und dem Objektiv befindet.

In einer vorteilhaften Ausführungsform ist die Messstruktur relativ zur Abbildungsoptik verschiebbar ausgebildet. Vorzugsweise ist die Messstruktur entlang der optischen Achse verschiebbar ausgebildet. Durch diese Ausgestaltung kann die Messstruktur insbesondere aus einer Brennebene der Abbildungsoptik heraus bewegt werden, so dass die Abbildungsoptik dadurch auf eine endliche Entfernung fokussiert werden kann. Je nach Verschiebungsrichtung entsteht ein reelles oder virtuelles Bild der Messstruktur in einer gewünschten (und vom Ausmaß der Verschiebung abhängigen) Entfernung zur Abbildungsoptik. Die Verschiebbarkeit der Messstruktur ermöglicht unten noch genauer erläuterte weitere Anwendungsmöglichkeiten der vorliegenden Erfindung. Ist die Einrichtung in dieser Ausführungsform, also mit verschiebbarer Messstruktur, außerdem aus Autokollimator eingerichtet, so kann die Einrichtung auch als fokussierbarer Autokollimator bezeichnet werden. Auch bei einer verschiebbaren Messstruktur wird der von der Abbildungsoptik erzeugte Messstrahl somit vorliegend noch immer als kollimierter Messstrahl, also als ein im Wesentlichen paralleles Lichtbündel, angesehen.

Vorzugsweise umfasst die Einrichtung einen hinter dem optischen Element angeordneten Spiegel. Alternativ umfasst die Einrichtung einen hinter dem optischen Element angeordneten Retroreflektor. Diese Ausgestaltungen können insbesondere zur Anwendung kommen, wenn die Einrichtung als Autokollimator ausgebildet ist und das optische Element in Transmission vermessen wird. Mit Hilfe des Spiegels oder Retroreflektors können optische Elemente in Transmission vermessen werden, ohne dass hinter dem optischen Element ein Teleskop angeordnet werden muss. Vielmehr können transmittierte Lichtstrahlen am Spiegel oder Retroreflektor reflektiert werden, um in umgekehrter Richtung über das optische Element und die Abbildungsoptik auf den Sensor zu gelangen. Der Spiegel bzw. Retroreflektor ermöglich somit die Vermessung transmittierender optischer Elemente mittels Autokollimation.

Gegenstand der Erfindung ist außerdem ein Verfahren zum Vermessen eines optischen Elements unter Verwendung einer oben beschriebenen erfindungsgemäßen Einrichtung gemäß Anspruch 10.

Die Ansteuerung der Lichtsegmente gemäß Schritt a. und c. kann nacheinander oder auch gleichzeitig erfolgen. Entsprechendes gilt für die Erfassung der Reflexionen gemäß der Schritte b. und d.. Es können auch gleichzeitig mit der Ansteuerung des ersten und zweiten Lichtsegments oder auch zeitlich versetzt dazu ein weiteres Lichtsegment oder Gruppen von Lichtsegmenten angesteuert werden und die entsprechenden Reflexionen erfasst werden.

Das erfindungsgemäße Verfahren kann durch weitere Merkmale fortgebildet werden, welche oben bereits in Verbindung mit der erfindungsgemäßen Einrichtung beschrieben wurden.

In einer bevorzugten Ausführungsform ist der gemäß den Schritten a. und c. erzeugte Messstrahl kollimiert. Das zu vermessende optische Element kann in einer bevorzugten Ausführungsform ein Kameraobjektiv sein, welches so angeordnet wird, dass von der Lichtquelle emittiertes Licht durch das Kameraobjektiv hindurchtritt und anschließend vom Sensor erfasst wird. Vorzugsweise wird mittels der gemäß der Schritte b. und d. erfassten transmittierten Messstrahlen ein Abbildungsfehler des Kameraobjektivs ermittelt, beispielsweise eine Defokussierung und/oder ein Astigmatismus und/oder eine Koma des Kameraobjektivs. Dabei kann hinter dem Kameraobjektiv ein vorzugsweise entlang der optischen Achse verschiebbarer Spiegel angeordnet werden, so dass durch das Kameraobjektiv hindurchgetretenes Licht nach Reflexion am Spiegel in umgekehrter Richtung durch das Kameraobjektiv hindurchtritt und anschließend vom Sensor erfasst wird. Mit Hilfe der Erfassung der von verschiedenen Lichtsegmenten erzeugten Messstrahlen können Abbildungsfehler des Kameraobjektivs ermittelt werden. Wenn anstelle des Spiegels ein Retroreflektor eingesetzt wird, können die Abbildungsfehler des Objektives auf besonders einfache Weise ermittelt werden, da die mathematische Rekonstruktion der Wellenfront bei der Verwendung eines Retroreflektors vereinfacht wird.

In einer bevorzugten Ausführungsform ist die Messstruktur relativ zur Abbildungsoptik verschiebbar und vorzugsweise entlang der optischen Achse der Abbildungsoptik verschiebbar ausgebildet. Weiter vorzugsweise wird die Messstruktur vor dem Ansteuern eines Lichtsegments und dem Erfassen einer an dem optischen Element erzeugten Reflexion oder Transmission des Messstrahls verschoben, um eine Position eines virtuellen oder reellen Bildes der Messstruktur an eine optische Eigenschaft des zu vermessenden optischen Elements anzupassen. Wie oben bereits erläutert, kann durch die Verschiebung der Messstruktur ein virtuelles bzw. reelles Bild der Messstruktur erzeugt werden, wobei die Position des Bildes der Messstruktur abhängig ist von der Verschiebung der Messstruktur. Insbesondere kann die Verschiebung der Messstruktur dazu verwendet werden, um die Position des Bildes der Messstruktur an eine Entfernungseinstellung des zu vermessenden Kameraobjektivs anzupassen. Wenn der Spiegel verschiebbar ausgestaltet ist, kann alternativ oder zusätzlich auch vorgesehen sein, dass die Position des Spiegels an das Auflagemaß des Kameraobjektivs angepasst wird. Schließlich können alternativ oder zusätzlich auch Konverteroptiken in den Strahlengang eingefügt werden, durch die eine Anpassung an die spezifischen Eigenschaften des Kameraobjektivs, wie beispielsweise eine besondere Fokuseinstellung, Apertur oder eine besondere Wellenfrontform, stattfindet.

Gegenstand der Erfindung ist weiterhin die Verwendung der erfindungsgemäßen Einrichtung gemäß Anspruch 1 zur Vermessung einer Ortsverschiebung eines Objektes. Bei der erfindungsgemäßen Verwendung ist das zu vermessende Objekt dazu ausgebildet einen Messstrahl der erfindungsgemäßen Einrichtung zumindest teilweise spiegelnd oder diffus zu reflektieren. Mittels eines Messobjektivs wird der Messstrahl in der Nähe des Objekts fokussiert, wobei anschließend die nachfolgenden Schritte ausgeführt werden:
a. Ansteuern eines ersten Lichtsegments zur Erzeugung eines Messstrahls;
b. Erfassen einer an dem Objekt erzeugten Reflexion des gemäß Schritt a. erhaltenen Messstrahls;
c. Ansteuern eines zweiten vom ersten verschiedenen Lichtsegments (18) zur Erzeugung eines Messstrahls;
d. Erfassen einer an dem Objekt erzeugten Reflexion des gemäß Schritt c. erhaltenen Messstrahls;
e. Auswerten der gemäß der Schritte b. und d. erfassten Reflexionen zur Ermittlung einer durch die Position des Objekts hervorgerufenen Wellenfront der Reflexionen;
f. Berechnen der Position anhand der in Schritt e. ermittelten Wellenfront.

Die erfindungsgemäße Verwendung kann durch weitere Merkmale weitergebildet werden, welche oben in Verbindung mit der erfindungsgemäßen Einrichtung bzw. mit dem erfindungsgemäßen Verfahren beschrieben wurden. Mittels der erfindungsgemäßen Verwendung kann die Position eines Objekts relativ zur Fokusposition des Messobjektivs sehr präzise vermessen werden. Im Unterschied zu anderen aus dem Stand der Technik bekannten Verfahren zur Bestimmung einer Objektposition relativ zum Fokus (beispielsweise mittels Modulationsübertragungsfunktion), kann mit Hilfe des erfindungsgemäßen Verfahrens die Position des Objektes relativ zum Fokus des Messobjektivs ohne Iteration oder Verschiebung des Objekts anhand der Wellenfront des Messobjektivs berechnet werden. Ein Verfahren zur Ermittlung der Wellenfront anhand von an einem Objekt erzeugten Reflexionen sowie zur Auswertung der Reflexionen zur Bestimmung einer Position des Objektes ist grundsätzlich aus dem Stand der Technik bekannt und kommt in Verbindung mit üblichen Wellenfrontsensoren oder Shack-Hartmann-Sensoren zum Einsatz. Das Teilverfahren der Auswertung und Berechnung gemäß der Schritte e. und f. muss daher vorliegend nicht im Detail erläutert werden.

Nachfolgend wird eine vorteilhafte Ausführungsform der vorliegenden Erfindung unter Bezugnahme auf die beigefügten Zeichnungen beispielhaft erläutert. Es zeigen:
Figur 1: eine schematische Ansicht einer Ausführungsform der erfindungsgemäßen Einrichtung zur Vermessung eines optischen Bauteils in einem ersten Betriebsmodus;
Figur 2: eine schematische Ansicht der Ausführungsform der Figur 1 in einem zweiten Betriebsmodus;
Figur 3: eine schematische Ansicht einer weiteren Ausführungsform der erfindungsgemäßen Einrichtung, welche zur Vermessung eines Kameraobjektivs verwendet wird;
Figur 4: eine schematische Ansicht einer weiteren Ausführungsform der erfindungsgemäßen Einrichtung, welche zur Vermessung eines Kameraobjektivs verwendet wird.

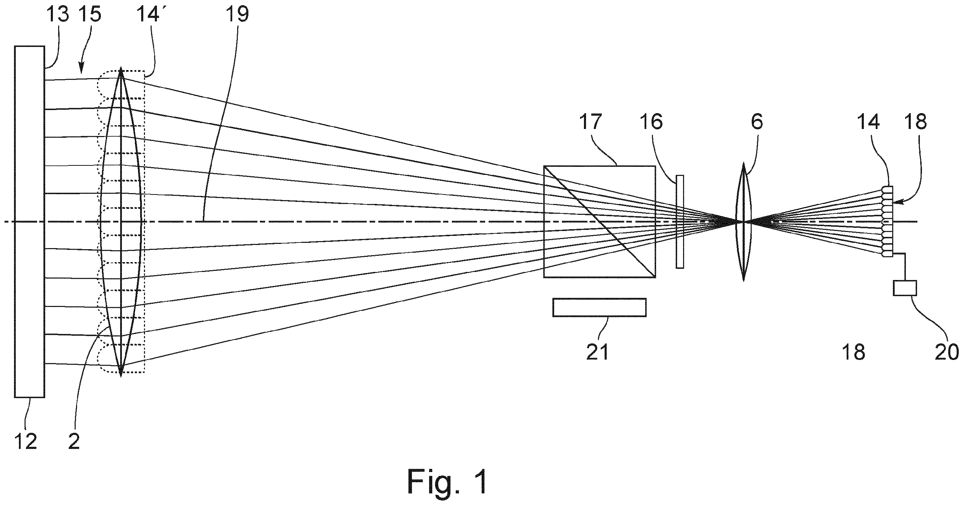

Figur 1 zeigt eine erfindungsgemäße Einrichtung zur Vermessung eines optischen Elements 12 in einer schematischen Ansicht. Das optische Element 12 weist eine Planfläche 13 auf, welche einfallendes Licht zumindest teilweise reflektiert. Das optische Element 12 ist auf einem in der Figur nicht gezeigten Probenhalter angeordnet, so dass die Fläche 13 im Wesentlichen senkrecht zu einer optischen Achse 19 der Einrichtung ausgerichtet ist. Die Richtung der Reflexion beträgt im Wesentlichen 180°. Die Einrichtung weist eine Lichtquelle 14 und eine Abbildungsoptik auf. Die Abbildungsoptik erzeugt aus dem von der Lichtquelle 14 emittierten Licht ein im Wesentlichen paralleles Strahlenbündel 15. Die Abbildungsoptik umfasst dazu eine Kondensorlinse 6, in deren Objektebene die Lichtquelle 14 angeordnet ist, sowie ein Objektiv 2. Die Bildebene der Kondensorlinse 6 stimmt im Wesentlichen mit der Eintrittspupille des Objektivs 2 überein. Das von der Kondensorlinse 6 erzeugte Bild 14' der Lichtquelle ist in Figur 1 gestrichelt angedeutet.

In der Nähe der Kondensorlinse 6 sowie zwischen Kondensorlinse 6 und Objektiv 2 ist eine Strichplatte 16 in den Strahlengang eingefügt. Die Strichplatte 16 befindet sich in der Objektebene des Objektivs 2, so dass ein darauf befindliches Fadenkreuz ins Unendliche abgebildet wird. Im Strahlengang zwischen Strichplatte 16 und Objektiv 2 ist weiterhin ein Strahlteiler 17 angeordnet, welcher eintretendes Licht teilweise transmittiert und teilweise in einem 90°-Winkel reflektiert.

Die Lichtquelle 14 weist eine Mehrzahl von in einem regelmäßigen quadratischen Gitter angeordneten Lichtsegmenten 18 auf. In Figur 1 sind elf in Radialrichtung nebeneinander angeordnete Lichtsegmente 18 sichtbar. Entlang der Erstreckung senkrecht zur Zeichenebene befinden sich zehn weitere entsprechende Reihen von Lichtsegmenten 18, so dass insgesamt 121 Lichtsegmente vorhanden sind. Die Abmessungen der Lichtsegmente betragen in Radialrichtung etwa 0,1 mm x 0,1 mm. Die Lichtsegmente 18 bilden somit eine Gesamtfläche von etwa 1,21 mm². Die Lichtsegmente sind in einer Ebene angeordnet, welche in einem 90°-Winkel zur optischen Achse ausgerichtet ist. Die Ebene stimmt mit der Objektebene der Kondensorlinse 6 überein.

Jedes Lichtsegment 18 wird durch eine Licht emittierende Diode (LED) gebildet. Die Lichtquelle ist mit einer Steuereinheit 20 verbunden. Jedes Lichtsegment 18 ist durch die Steuereinheit 20 einzeln ansteuerbar. Es kann also ein beliebiges Lichtsegment 18 oder eine beliebige Gruppe von Lichtsegmenten 18 zur Abgabe von Licht eingeschaltet werden, während die übrigen Lichtsegmente 18 ausgeschaltet bleiben und kein Licht emittieren.

In dem in Figur 1 gezeigten Betriebszustand sind alle Lichtsegmente 14 eingeschaltet. Der Übersicht halber ist ausgehend von jedem der Lichtsegmente 18 lediglich ein Lichtstrahl eingezeichnet. Das von den Lichtsegmenten 18 emittierte Licht verläuft durch die Kondensorlinse 6, die Strichplatte 16 und den Strahlteiler 17 und wird wie oben bereits beschrieben vom Objektiv in ein im Wesentlichen paralleles Strahlenbündel 15 umgewandelt. Das Strahlenbündel 15 wird an der zu vermessenden Fläche 13 im Wesentlichen in sich selbst reflektiert und gelangt über den Strahlteiler 17 zu einem Sensor 21, welcher in der Bildebene des Objektivs 2 angeordnet ist. Auf dem Sensor 21 wird auf diese Weise das Bild der Strichplatte 16 erfasst. Aus der Position des durch das Bild der Strichplatte 16 gebildeten Fadenkreuzes auf dem Sensor 21 kann die Ausrichtung der Fläche 13 ermittelt werden. Dazu kann zuvor eine Referenzmessung an einer idealen optischen Fläche in bekannter Ausrichtung durchgeführt worden sein, um die Position des Reflexes der Fläche 13 mit derjenigen der Referenzmessung zu vergleichen.

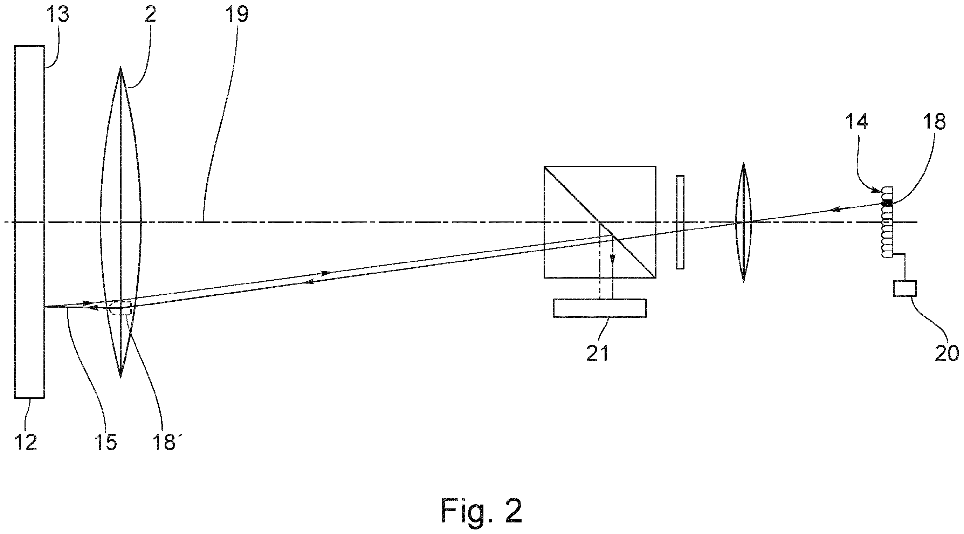

Figur 2 zeigt die erfindungsgemäße Einrichtung in einem zweiten Betriebszustand. In diesem Betriebszustand ist lediglich ein einzelnes Lichtsegment 18 eingeschaltet, während die übrigen Lichtsegmente ausgeschaltet sind. Das eingeschaltete Lichtsegment 18 ist in Figur 1 durch eine dunkle Schattierung gekennzeichnet. Im Bereich der Eintrittspupille des Objektivs 2 wird im gestrichelt angedeuteten Bereich 18' ein Bild des eingeschalteten Lichtsegments 18 erzeugt. Das Objektiv 2 erzeugt aus dem Licht des Lichtsegments 18 ein Teilbündel 15', welches lediglich einen kleinen Ausschnitt aus dem in Figur 1 gezeigten Strahlenbündel 15 darstellt. Entsprechend wird ein deutlich kleinerer Abschnitt der zu vermessenden Fläche 13 beleuchtet. Nach Reflexion an der Fläche 13 gelangt das Teilbündel 15' analog zu der oben in Verbindung mit Figur 1 beschriebenen Weise zum Sensor 21 und die Position des Reflexes (bzw. des Fadenkreuzes) wird vom Sensor erfasst. Indem lediglich ein kleiner Abschnitt der zu vermessenden Fläche 13 beleuchtet wird, kann die lokale Richtung der Reflexion an der Fläche 13 im beleuchteten Bereich untersucht werden. Eine solche Messung kann für jedes weitere der Lichtsegmente oder auch für eine Mehrzahl von gleichzeitig eingeschalteten Lichtsegmenten durchgeführt werden, um die zu untersuchende Fläche 13 ortsaufgelöst abzutasten und so genaue Informationen über die lokale Formgebung der Fläche 13 zu gewinnen.

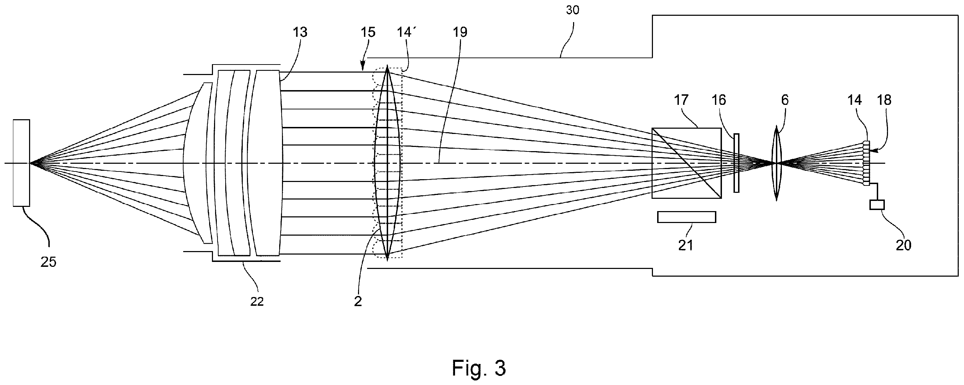

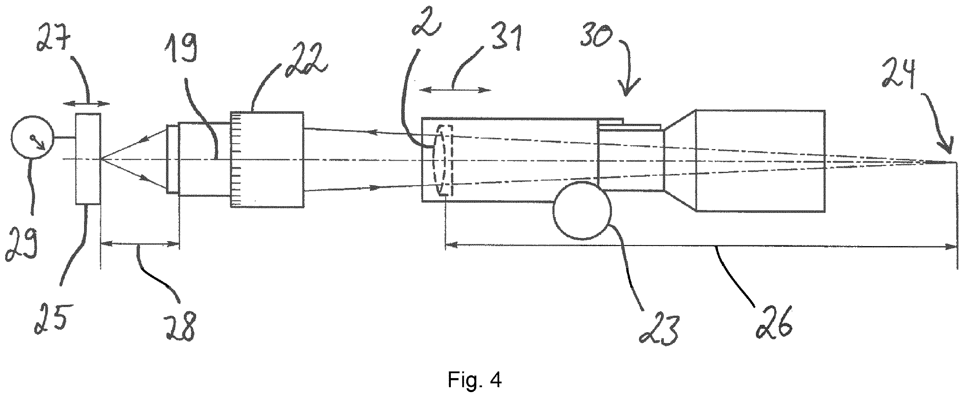

Figur 3 zeigt eine schematische Ansicht einer weiteren Ausführungsform einer erfindungsgemäßen Einrichtung, wobei das von der Einrichtung zu vermessende optische Element vorliegend ein Kameraobjektiv 22 ist. Die Ausführungsform der Figur 3 stimmt im Wesentlichen mit der Ausführungsform der Figuren 1 und 2 überein, wobei die Elemente der Einrichtung in Figur 3 in einem Gehäuse 30 angeordnet sind und das Kameraobjektiv 22 vor dem Gehäuse 30 in einem definierten Abstand zum Objektiv 2 positioniert ist. Ein weiterer Unterschied ist, dass hinter dem zu vermessenden Kameraobjektiv 22 ein Planspiegel 25 angeordnet ist. Das Kameraobjektiv 22 umfasst vorliegend eine Mehrzahl von Linsen, kann aber grundsätzlich auch durch nur eine einzelne Linse gebildet sein. Das Strahlenbündel 15 tritt über eine Fläche 13 der ersten Linse ein und über eine Fläche der letzten Linse wieder aus. Der hinter dem Kameraobjektiv 22 angeordnete Planspiegel reflektiert den transmittierten Messstrahl, welcher nachfolgend in umgekehrter Richtung zurück durch das Kameraobjektiv 22 sowie die Abbildungsoptik der erfindungsgemäßen Einrichtung verläuft, um anschließend analog zu der oben bereits beschriebenen Weise auf dem Sensor 21 erfasst zu werden. Das Kameraobjektiv 22 wird somit in Transmission vermessen. Die erfindungsgemäße Einrichtung lässt sich insbesondere dazu verwenden, um beispielsweise eine bestimmte Entfernungseinstellung des Kameraobjektivs 22 oder auch Abbildungsfehler des Kameraobjektivs 22 zu vermessen. Dies ist nachfolgend in Verbindung mit Figur 4 genauer erläutert.

Figur 4 illustriert die Verwendung der erfindungsgemäßen Einrichtung zur Vermessung eines Kameraobjektivs 22. Mit Hilfe der erfindungsgemäßen Einrichtung kann eine Entfernungseinstellung des Kameraobjektivs überprüft werden. Sofern das Kameraobjektiv eine Mehrzahl von variablen Entfernungseinstellungen aufweist, können auch nacheinander mehrere Entfernungseinstellungen überprüft werden. Bei der Überprüfung einer Entfernungseinstellung wird ermittelt, ob das Kameraobjektiv bei einer bestimmten Entfernungseinstellung in der Bildebene des Kameraobjektivs (in der sich beispielsweise der Film oder der Sensor einer Kamera befindet, wenn das Kameraobjektiv auf die Kamera aufgesetzt ist) eine ebene Wellenfront erzeugt und somit ein scharfes Bild liefert.

Die erfindungsgemäße Einrichtung weist vorliegend ein Gehäuse 30 auf, in das die in Verbindung mit den Figuren 1 und 2 beschriebenen Elemente integriert sind. Diese Elemente sind daher (abgesehen vom Objektiv 2) der Einfachheit halber nicht erneut dargestellt.

Das zu vermessende Kameraobjektiv 22 ist vorliegend auf eine Entfernungseinstellung von 3 m eingestellt und in einem Abstand von 0,1 m vor dem Objektiv 2 der erfindungsgemäßen Einrichtung platziert. Zur genauen Abstandseinstellung kann das Gehäuse 30 bewegbar gelagert sein (siehe Pfeil 31). Die optische Achse des Kameraobjektivs 22 ist entlang der optischen Achse 19 der Einrichtung ausgerichtet. Denkbar ist auch, das die optische Achse des Objektives zur Achse der Einrichtung gekippt ist. Der Fachmann spricht dann von Messung im Bildfeld. Für diese Variante muss der Planspiegel 25 durch einen Retroreflektor ersetzt werden.

Im Unterschied zu der in den Figuren 1 bis 3 gezeigten Einrichtung ist innerhalb der Einrichtung der Figur 4 die Messstruktur entlang der optischen Achse 19 verschiebbar ausgebildet, wobei ein Einstellrad 23 vorhanden ist, mit dem die Position der Messstruktur präzise eingestellt werden kann. Dadurch ist es möglich, in einem gewünschten Abstand zum Objektiv 2 ein virtuelles oder reelles Bild der Messstruktur zu erzeugen. Vorliegend wird die Position der Messstruktur so eingestellt, dass im Abstand von -2,9 m (siehe Bezugszeichen 26) zum Objektiv 2 ein virtuelles Bild 24 der Messstruktur erzeugt wird.

Hinter dem Kameraobjektiv 22 ist ein Planspiegel 25 angeordnet, welcher entlang dem Pfeil 27, also entlang der optischen Achse, verschiebbar ist. Die Position des Planspiegels 25 ist mittels einer Positionsbestimmungseinrichtung 29 präzise bestimmbar. Der Abstand 28 zwischen der Auflagefläche des Kameraobjektivs 22 und dem Planspiegel 25 ist so gewählt, dass er dem Auflagemaß des Kameraobjektivs 22 entspricht.

Ein von der Einrichtung emittierter Lichtstrahl wird nach dem hindurchtreten durch das Kameraobjektiv 22 am Spiegel 25 reflektiert, um anschließend in umgekehrter Richtung über das Kameraobjektiv und die Abbildungsoptik vom Sensor (nicht gezeigt) erfasst zu werden. Das virtuelle Bild 24 der Messstruktur erscheint für das Kameraobjektiv in einer Entfernung von 3 m und sollte daher vom Kameraobjektiv 22 in die Ebene des Planspiegels 25 fokussiert werden. Wenn das Kameraobjektiv einen Einstellfehler (also eine Abweichung von der Einstellung auf 3m) aufweist oder das Auflagemaß nicht eingehalten wird, befindet sich das Bild der Messstruktur jeweils vor oder hinter dem Spiegel. Dadurch wird das zum Sensor zurück reflektierte Bild defokussiert. Die Defokussierung kann mit Hilfe der erfindungsgemäßen Ansteuerbarkeit der Lichtsegmente auf besonders einfache und präzise Weise festgestellt werden. Dazu können beispielsweise gleichzeitig zwei symmetrisch zur optischen Achse ausgerichtete und von der optischen Achse beabstandete Lichtsegmente oder Gruppen von Lichtsegmenten angesteuert werden. Mit Hilfe dieser symmetrisch ausgerichteten Lichtsegmente kann ein grundsätzlich aus dem Stand der Technik bekanntes Verfahren zur Bestimmung des Fokusfehlers durchgeführt werden, wie es beispielsweise in der DE 2543563 A1 beschrieben ist. Das Maß der Defokussierung kann beispielsweise mit Hilfe der verschiebbaren Messstruktur oder mit Hilfe des verschiebbaren Planspiegels 25 ermittelt werden , wenn die Brennweite des Objektives nicht bekannt ist. Wenn die Brennweite des Objektives bekannt ist, kann das Maß und das Vorzeichen der Defokussierung aus den Messwerten des Verfahrens bestimmt werden. Dabei ist die Fokussierung in der virtuellen Bildebene (z.B. bei der Entfernung 3,07 m) immer aus den Messwerten bestimmbar. Dadurch kann bei unbekannter Brennweite zumindest das Vorzeichen der Defokussierung in der Bildebene angegeben werden.

Mit Hilfe der Erfindung können zudem auch andere Abbildungsfehler, beispielsweise ein Astigmatismus und/oder eine Koma des Kameraobjektivs ermittelt werden, indem die lokale Wellenfrontdeformation des Kameraobjektivs mit Hilfe der erfindungsgemäßen unabhängig ansteuerbaren Lichtsegmente Ermittelt wird.

Anstelle des Planspiegels 25 kann auch ein Retroreflektor verwendet werden, bei dem einfallende Messstrahlen in sich zurückgeworfen werden. Dadurch kann die mathematische Rekonstruktion der Wellenfront erleichtert werden. Beispielsweise kann als Retroreflektor ein sphärischer Spiegel verwendet werden, welcher so hinter dem zu vermessenden optischen Element angeordnet wird, dass die einfallenden Messstrahlen in sich zurückgeworfen werden. Bei der Verwendung eines Retroreflektors ist es auch möglich, dass die optische Achse des Objektives zur Achse der Einrichtung gekippt ist und dadurch eine Messung im Bildfeld durchgeführt werden kann.

## Patentansprüche

1. Einrichtung zur Vermessung eines optischen Elements (12) umfassend:
a. eine Lichtquelle (14),
b. eine vom Licht der Lichtquelle (14) beleuchtete Messstruktur (16), welche Bereiche unterschiedlichen Transmissionsgrades aufweist,
c. eine Abbildungsoptik zur Umwandlung von durch die Messstruktur (16) transmittiertem Licht in einen kollimierten Messstrahl, welcher auf das optische Element (12) gerichtet ist, und
d. einen Sensor (21) zur Erfassung einer an dem optischen Element (12) erzeugten Reflexion des Messstrahls oder zur Erfassung einer durch das optische Element (12) hindurchtretenden Transmission des Messstrahls,
e. und eine Auswerteeinheit zur Auswertung der vom Sensor (21) erfassten Messsignale,
**dadurch gekennzeichnet, dass** die Lichtquelle (14) eine Mehrzahl von Lichtsegmenten (18, 18') aufweist, die in Transversalrichtung derart zueinander versetzt angeordnet sind, dass durch unterschiedliche Lichtsegmente (18, 18') in Transversalrichtung zueinander versetzte Teilstrahlen des Messstrahls erzeugbar sind, wobei die Einrichtung weiterhin eine Steuereinheit (20) aufweist, welche zur unabhängigen Ansteuerung der Mehrzahl von Lichtsegmenten (18, 18') ausgebildet ist, wobei die Auswerteeinheit dazu ausgebildet ist, die optischen Eigenschaften des optischen Elements (12) anhand der zueinander versetzten Teilstrahlen ortsaufgelöst zu bestimmen.

2. Einrichtung gemäß Anspruch 1, bei der die Messstruktur (16) relativ zur Abbildungsoptik verschiebbar und vorzugsweise entlang einer optischen Achse (19) der Abbildungsoptik verschiebbar ausgebildet ist und/oder bei der die Abbildungsoptik einen Kondensor (6) und ein Objektiv (2) aufweist, wobei der Kondensor (6) zur Abbildung der Lichtquelle (14) in eine Eintrittspupille des Objektivs (2) ausgebildet ist.

3. Einrichtung gemäß einem der Ansprüche 1 oder 2, bei der zumindest ein Teil der Lichtsegmente (18, 18') in einer Ebene angeordnet ist, wobei die Ebene vorzugsweise einen Winkel mit einer optischen Achse (19) der Abbildungsoptik einschließt, welcher weiter vorzugsweise im Wesentlichen 90° beträgt.

4. Einrichtung gemäß einem der Ansprüche 1 bis 3, bei der zumindest ein Teil der Lichtsegmente (18, 18') ein regelmäßiges Gitter bilden, wobei das Gitter vorzugsweise kreisförmig oder rechtwinklig ausgebildet ist, wobei die optische Achse (19) der Abbildungsoptik weiter vorzugsweise durch das Zentrum der Lichtquelle (14) verläuft.

5. Einrichtung gemäß einem der Ansprüche 1 bis 4, bei der ein Lichtsegment (18, 18') durch eine unabhängig ansteuerbare lichtemittierende Diode und vorzugsweise durch eine unabhängig ansteuerbare organische lichtemittierende Diode gebildet ist und/oder bei der ein Lichtsegment (18, 18') durch ein Austrittsende eines Lichtwellenleiters gebildet ist, wobei der Lichtwellenleiter bevorzugt von einer oder mehreren LEDs gespeist wird und/oder bei der ein Lichtsegment (18, 18') als Mikrospiegel eines DLP-Chips ausgebildet ist.

6. Einrichtung gemäß einem der Ansprüche 1 bis 5, bei der die Lichtsegmente (18, 18') zur Abgabe von Licht einer ersten Wellenlänge und zumindest einer zweiten von der ersten verschiedenen Wellenlänge ausgebildet sind.

7. Einrichtung gemäß einem der Ansprüche 1 bis 6, welche einen Kollimator und ein Teleskop aufweist, wobei die Abbildungsoptik Teil des Kollimators ist und wobei der Sensor (21) in der Bildebene des Teleskops und die Messstruktur (16) in der Bildebene der Abbildungsoptik angeordnet sind.

8. Einrichtung gemäß einem der Ansprüche 1 bis 6, welche als Autokollimator ausgebildet ist, wobei der Sensor (21) in einer Bildebene der Abbildungsoptik angeordnet ist.

9. Einrichtung gemäß Anspruch 8, welche weiterhin einen hinter dem optischen Element angeordneten Spiegel (25) oder Retroreflektor aufweist.

10. Verfahren zum Vermessen eines optischen Elements (12) unter Verwendung einer Einrichtung gemäß einem der Ansprüche 1 bis 9, umfassend die nachfolgenden Schritte:
a. Ansteuern eines ersten Lichtsegments (18), so dass vom ersten Lichtsegment (18) emittiertes Licht durch die Messstruktur (16) hindurchtritt und mittels der Abbildungsoptik in einen Teilstrahl umgewandelt wird, welcher auf das optische Element (12) gerichtet ist;
b. Erfassen einer an dem optischen Element (12) erzeugten Reflexion oder Transmission des gemäß Schritt a. erhaltenen Teilstrahls;
c. Ansteuern eines zweiten vom ersten verschiedenen Lichtsegments (18) so dass vom zweiten Lichtsegment (18) emittiertes Licht durch die Messstruktur hindurchtritt und mittels der Abbildungsoptik in einen Teilstrahl umgewandelt wird, welcher auf das optische Element (12) gerichtet ist;
d. Erfassen einer an dem optischen Element (12) erzeugten Reflexion oder Transmission des gemäß Schritt c. erhaltenen Teilstrahls, **gekennzeichnet durch**
e. Durchführen einer ortsaufgelösten Bestimmung der optischen Eigenschaften des optischen Elements anhand der zueinander versetzten Teilstrahlen.

11. Verfahren gemäß Anspruch 10, bei dem das optische Element (12) ein Kameraobjektiv (22) ist, welches so angeordnet wird, dass von der Lichtquelle (14) emittiertes Licht durch das Kameraobjektiv (22) hindurchtritt und anschließend vom Sensor (21) erfasst wird, wobei mittels der gemäß der Schritte b. und d. erfassten transmittierten Messstrahlen ein Abbildungsfehler des Kameraobjektivs, vorzugsweise eine Defokussierung und/oder ein Astigmatismus und/oder eine Koma des Kameraobjektivs, ermittelt wird.

12. Verfahren gemäß Anspruch 11, bei dem hinter dem Kameraobjektiv (22) ein vorzugsweise entlang der optischen Achse (19) verschiebbarer Spiegel (25) angeordnet wird, so dass durch das Kameraobjektiv (22) hindurchgetretenes Licht nach Reflexion am Spiegel (25) in umgekehrter Richtung durch das Kameraobjektiv (22) hindurchtritt und anschließend vom Sensor (21) erfasst wird.

13. Verfahren gemäß einem der Ansprüche 10 bis 12, bei dem die Messstruktur (16) relativ zur Abbildungsoptik verschiebbar und vorzugsweise entlang der optischen Achse (19) verschiebbar ausgebildet ist, wobei die Messstruktur (16) vor dem Ansteuern eines Lichtsegments (18) und dem Erfassen einer an dem optischen Element (12) erzeugten Reflexion oder Transmission des Messstrahls verschoben wird, um eine Position eines virtuellen oder reellen Bildes der Messstruktur an eine optische Eigenschaft des zu vermessenden optischen Elements anzupassen.

14. Verfahren gemäß einem der Ansprüche 10 bis 13, bei dem der gemäß den Schritten a. und c. erzeugte Messstrahl kollimiert ist.

15. Verwendung einer Einrichtung gemäß einem der Ansprüche 1 bis 9 zur Vermessung einer Ortsverschiebung eines Objektes, wobei das zu vermessende Objekt dazu ausgebildet ist, einen von der Einrichtung emittierten Messstrahl zumindest teilweise spiegelnd oder diffus zu reflektieren, wobei der Messstrahl mittels eines Messobjektivs in der Nähe des Objekts fokussiert wird und wobei anschließend die nachfolgenden Schritte ausgeführt werden:
a. Ansteuern eines ersten Lichtsegments zur Erzeugung eines Teilstrahls;
b. Erfassen einer an dem Objekt erzeugten Reflexion des gemäß Schritt a. erhaltenen Teilstrahls;
c. Ansteuern eines zweiten vom ersten verschiedenen Lichtsegments (18) zur Erzeugung eines Teilstrahls;
d. Erfassen einer an dem Objekt erzeugten Reflexion des gemäß Schritt c. erhaltenen Teilstrahls;
e. Auswerten der gemäß der Schritte b. und d. erfassten Reflexionen zur Ermittlung einer durch die Position des Objekts hervorgerufenen Wellenfront der Reflexionen;
f. Berechnen der Position anhand der in Schritt e. ermittelten Wellenfront.

## Claims

1. Device for measuring an optical element (12) comprising:
a. a light source (14),
b. a measurement structure (16) having regions with differing transmittance, said measurement structure being illuminated by the light of the light source (14),
c. an imaging optical unit for converting light transmitted by the measurement structure (16) into a collimated measurement beam that is directed onto the optical element (12), and
d. a sensor (21) for detecting a reflection of the measurement beam produced at the optical element (12) or for detecting a transmission of the measurement beam passing through the optical element (12),
e. and an evaluation unit for evaluating the measurement signals detected by the sensor (21), **characterized in that** the light source (14) has a plurality of light segments (18, 18') arranged offset with respect to one another in a transverse direction in such a way that different light segments (18, 18') are able to generate partial beams of the measurement beam that are offset with respect to one another in a transverse direction, wherein the device furthermore has a control unit (20), which is configured for independently controlling the plurality of light segments (18, 18'), the evaluation unit being configured to determine the optical properties of the optical element (12) in a spatially resolved manner on the basis of the partial beams that are offset with respect to one another.

2. Device according to Claim 1, wherein the measurement structure (16) is configured such that it is displaceable relative to the imaging optical unit and preferably displaceable along an optical axis (19) of the imaging optical unit, and/or wherein the imaging optical unit has a condenser (6) and a lens (2), wherein the condenser (6) is configured for imaging the light source (14) into an entrance pupil of the lens (2).

3. Device according to either of Claims 1 and 2, wherein at least one portion of the light segments (18, 18') is arranged in a plane, wherein the plane preferably forms an angle with an optical axis (19) of the imaging optical unit, which angle is with further preference substantially 90°.

4. Device according to any of Claims 1 to 3, wherein at least one portion of the light segments (18, 18') form a regular grid, wherein the grid is preferably configured as circular or rectangular, wherein the optical axis (19) of the imaging optical unit with further preference extends through the centre of the light source (14).

5. Device according to any of Claims 1 to 4, wherein a light segment (18, 18') is formed by an independently controllable light-emitting diode and preferably by an independently controllable organic light-emitting diode and/or wherein a light segment (18, 18') is formed by an exit end of an optical waveguide, wherein the optical waveguide is preferably fed by one or more LEDs, and/or wherein a light segment (18, 18') is configured as a micromirror of a DLP chip.

6. Device according to any of Claims 1 to 5, wherein the light segments (18, 18') are configured for emitting light having a first wavelength and at least one second wavelength different from the first wavelength.

7. Device according to any of Claims 1 to 6, which has a collimator and a telescope, wherein the imaging optical unit is part of the collimator and wherein the sensor (21) is arranged in the image plane of the telescope and the measurement structure (16) is arranged in the image plane of the imaging optical unit.

8. Device according to any of Claims 1 to 6, which is configured as an autocollimator, wherein the sensor (21) is arranged in an image plane of the imaging optical unit.

9. Device according to Claim 8, which furthermore has a mirror (25) or retroreflector arranged behind the optical element.

10. Method for measuring an optical element (12) using a device according to any of Claims 1 to 9, comprising the following steps:
a. controlling a first light segment (18), such that light emitted by the first light segment (18) passes through the measurement structure (16) and is converted into a partial beam by means of the imaging optical unit, which partial beam is directed onto the optical element (12);
b. detecting a reflection or transmission of the partial beam obtained in accordance with step a., said reflection or transmission being produced at the optical element (12);
c. controlling a second light segment (18), which is different from the first light segment, such that light emitted by the second light segment (18) passes through the measurement structure and is converted into a partial beam by means of the imaging optical unit, which partial beam is directed onto the optical element (12);
d. detecting a reflection or transmission of the partial beam obtained in accordance with step c., said reflection or transmission being produced at the optical element (12),
**characterized by**
e. carrying out a spatially resolved determination of the optical properties of the optical element on the basis of the partial beams that are offset with respect to one another.

11. Method according to Claim 10, wherein the optical element (12) is a camera lens (22) arranged such that light emitted by the light source (14) passes through the camera lens (22) and is subsequently detected by the sensor (21), wherein an imaging aberration of the camera lens, preferably a defocusing and/or an astigmatism and/or a coma of the camera lens, is determined by means of the transmitted measurement beams detected in accordance with steps b. and d..

12. Method according to Claim 11, wherein a mirror (25), which is preferably displaceable along the optical axis (19), is arranged behind the camera lens (22), such that light that has passed through the camera lens (22) passes through the camera lens (22) in the opposite direction after reflection at the mirror (25) and is subsequently detected by the sensor (21) .

13. Method according to any of Claims 10 to 12, wherein the measurement structure (16) is configured such that it is displaceable relative to the imaging optical unit and preferably displaceable along the optical axis (19), wherein the measurement structure (16) is displaced before the process of controlling a light segment (18) and the process of detecting a reflection or transmission of the measurement beam, said reflection or transmission being produced at the optical element (12), in order to adapt a position of a virtual or real image of the measurement structure to an optical property of the optical element to be measured.

14. Method according to any of Claims 10 to 13, wherein the measurement beam generated in accordance with steps a. and c. is collimated.

15. Use of a device according to any of Claims 1 to 9 for measuring a spatial displacement of an object, wherein the object to be measured is configured to at least partly specularly or diffusely reflect a measurement beam emitted by the device, wherein the measurement beam is focused by means of a measurement lens in the vicinity of the object and wherein the following steps are subsequently carried out:
a. controlling a first light segment for generating a partial beam;
b. detecting a reflection of the partial beam obtained in accordance with step a., said reflection being produced at the object;
c. controlling a second light segment (18), which is different from the first light segment, for generating a partial beam;
d. detecting a reflection of the partial beam obtained in accordance with step c., said reflection being produced at the object;
e. evaluating the reflections detected in accordance with steps b. and d. in order to determine a wavefront of the reflections that is caused by the position of the object;
f. calculating the position on the basis of the wavefront determined in step e.

## Revendications

1. Dispositif de mesure d'un élément optique (12), ledit dispositif comprenant :
a. une source de lumière (14),
b. une structure de mesure (16) qui est éclairée par la lumière de la source de lumière (14) et qui comporte des zones à niveaux de transmission différents,
c. une optique de reproduction destinée à convertir la lumière transmise par la structure de mesure (16) en faisceau de mesure collimaté qui est dirigé sur l'élément optique (12), et
d. un capteur (21) destiné à détecter une réflexion du faisceau de mesure qui est générée sur l'élément optique (12) ou à détecter une transmission du faisceau de mesure qui traverse l'élément optique (12),
e. et une unité d'évaluation destinée à évaluer les signaux de mesure détectés par le capteur (21), **caractérisé en ce que** la source de lumière (14) comporte une pluralité de segments lumineux (18, 18') qui sont disposés en étant décalés les uns des autre dans la direction transversale de manière à ce que des faisceaux partiels du faisceau de mesure, qui sont décalés dans la direction transversale, puissent être générés par différents segments lumineux (18, 18'), le dispositif comportant également une unité de commande (20) qui est conçue pour commander indépendamment la pluralité de segments lumineux (18, 18'), l'unité d'évaluation étant conçue pour déterminer avec une résolution spatiale les propriétés optiques de l'élément optique (12) sur la base des faisceaux partiels décalés les uns des autres.

2. Dispositif selon la revendication 1, dans lequel la structure de mesure (16) est conçue pour être coulissante par rapport à l'optique de reproduction et de préférence coulissante suivant un axe optique (19) de l'optique de reproduction et/ou dans lequel l'optique de reproduction comporte un condenseur (6) et un objectif (2), le condenseur (6) étant conçu pour reproduire la source de lumière (14) dans une pupille d'entrée de l'objectif (2).

3. Dispositif selon l'une des revendications 1 et 2, dans lequel au moins une partie des segments lumineux (18, 18') est disposée dans un plan, le plan formant de préférence, avec un axe optique (19) de l'optique de reproduction, un angle qui est encore de préférence sensiblement de 90°.

4. Dispositif selon l'une des revendications 1 à 3, dans lequel au moins une partie des segments lumineux (18, 18') forment un réseau régulier, le réseau étant de préférence de forme circulaire ou rectangulaire, l'axe optique (19) de l'optique de reproduction passant de préférence par le centre de la source de lumière (14) .

5. Dispositif selon l'une des revendications 1 à 4, dans lequel un segment lumineux (18, 18') est formé par une diode électroluminescente commandable indépendamment et de préférence par une diode électroluminescente organique commandable indépendamment et/ou dans lequel un segment lumineux (18, 18') est formé par une extrémité de sortie d'un guide d'onde optique, le guide d'ondes optique étant de préférence alimenté par une ou plusieurs LED, et/ou dans lequel un segment lumineux (18, 18') est conçu comme un micro-miroir d'une puce DLP.

6. Dispositif selon l'une des revendications 1 à 5, dans lequel les segments lumineux (18, 18') sont conçus pour émettre de la lumière d'une première longueur d'onde et d'au moins une deuxième longueur d'onde différente de la première longueur d'onde.

7. Dispositif selon l'une des revendications 1 à 6, qui comporte un collimateur et un télescope, l'optique de reproduction faisant partie du collimateur et le capteur (21) étant disposé dans le plan image du télescope et la structure de mesure (16) étant disposée dans le plan image de l'optique de reproduction.

8. Dispositif selon l'une des revendications 1 à 6, qui est conçu comme un auto-collimateur, le capteur (21) étant disposé dans un plan image de l'optique de reproduction.

9. Dispositif selon la revendication 8, qui comporte en outre un miroir (25) ou un rétro-réflecteur qui est disposé derrière l'élément optique.

10. Procédé de mesure d'un élément optique (12) à l'aide d'un dispositif selon l'une des revendications 1 à 9, ledit procédé comprenant les étapes suivantes :
a. commander un premier segment lumineux (18) de sorte que la lumière émise par le premier segment lumineux (18) traverse la structure de mesure (16) et soit convertie au moyen de l'optique de reproduction en un faisceau partiel qui est dirigé sur l'élément optique (12) ;
b. détecter une réflexion ou transmission, générée au niveau de l'élément optique (12), du faisceau partiel reçu selon l'étape a. ;
c. commander un deuxième segment lumineux (18), différent du premier, de sorte que la lumière émise par le deuxième segment lumineux (18) traverse la structure de mesure et soit convertie au moyen de l'optique de reproduction en un faisceau partiel qui est dirigé sur l'élément optique (12) ;
d. détecter une réflexion ou transmission, générée au niveau de l'élément optique (12), du faisceau partiel reçu selon l'étape c.,
**caractérisé par** l'étape suivante
e. effectuer une détermination à résolution spatiale des propriétés optiques de l'élément optique à l'aide des faisceaux partiels décalés les uns des autres.

11. Procédé selon la revendication 10, dans lequel l'élément optique (12) est un objectif de caméra (22) qui est disposé de manière à ce que la lumière émise par la source de lumière (14) traverse l'objectif de caméra (22) puis soit détectée par le capteur (21), une erreur de reproduction de l'objectif de caméra, de préférence une défocalisation et/ou un astigmatisme et/ou un coma de l'objectif de caméra, étant déterminée au moyen des faisceaux de mesure transmis et détectés selon les étapes b. et d..

12. Procédé selon la revendication 11, dans lequel un miroir (25) qui est de préférence coulissant suivant l'axe optique (19), est disposé derrière l'objectif de caméra (22) de sorte que la lumière qui a traversé l'objectif de caméra (22) traverse, après réflexion sur le miroir (25), l'objectif de caméra (22) en sens inverse puis soit détectée par le capteur (21).

13. Procédé selon l'une des revendications 10 à 12, dans lequel la structure de mesure (16) est conçue pour être coulissante par rapport à l'optique de reproduction et de préférence coulissante suivant l'axe optique (19), la structure de mesure (16) étant amenée à coulisser avant de commander un segment lumineux (18) et avant de détecter une réflexion ou transmission du faisceau de mesure qui est générée au niveau de l'élément optique (12) afin d'adapter une position d'une image virtuelle ou réelle de la structure de mesure à une propriété optique de l'élément de mesure optique.

14. Procédé selon l'une des revendications 10 à 13, dans lequel le faisceau de mesure généré suivant les étapes a. et c. est collimaté.

15. Utilisation d'un dispositif selon l'une des revendications 1 à 9 pour mesurer un coulissement local d'un objet, l'objet à mesurer étant conçu pour réfléchir au moins partiellement de manière spéculaire ou diffuse un faisceau de mesure émis par le dispositif, le faisceau de mesure étant focalisé à proximité de l'objet au moyen d'un objectif de mesure puis les étapes suivantes étant réalisées :
a. commander un premier segment lumineux pour générer un faisceau partiel ;
b. détecter une réflexion, générée sur l'objet, du faisceau partiel reçu selon l'étape a. ;
c. commander un deuxième segment lumineux (18), différent du premier, pour générer un faisceau partiel ;
d. détecter une réflexion, générée sur l'objet, du faisceau partiel reçu selon l'étape c. ;
e. évaluer les réflexions, détectées selon les étapes
b. et d., pour déterminer un front d'onde des réflexions généré en raison de la position de l'objet ;
f. calculer la position à l'aide du front d'onde déterminé à l'étape e..
